# EUROPEAN PATENT APPLICATION

(11) **EP 4 610 094 A1**
(43) Date of publication of application: **03.09.2025**
(21) Application number: 25159952.8
(22) Date of filing: 25.02.2025
(51) Int. Cl.: B60L 53/14, B60L 53/53, B60L 53/57

(54) **PORTABLE CHARGING APPARATUS FOR ELECTRIC VEHICLES**

(30) Priority: 27.02.2024 US 202463558177 P; 24.02.2025 US 202519061006
(71) Applicant: Beam Global, San Diego, CA 92121 (US)
(72) Inventor: Wheatley, Desmond, Rancho Santa Fe California, 92091 (US); Al-Hallaj, Said, Chicago, Illinois, 60616 (US)
(74) Representative: KBN IP Patentanwälte Partnerschaft mbB

(57) **Abstract**

An apparatus and method for charging an electric vehicle. The apparatus includes a wheeled portable housing with a telescoping handle. A battery array is within the portable housing, suitable for providing a daily charge for the electric vehicle. An antitheft security tether is attached to the portable housing, and forms a security loop extending that is foldable from an upright position, for transport, storage, or battery array charging, to a horizontal position for receiving a wheel of an electric vehicle. The looped tether extends around the tire on the ground so that the apparatus cannot be moved until the vehicle is moved.

## Description

### BACKGROUND OF THE INVENTION

This invention relates generally to vehicle chargers and, more particularly, to a portable battery charger for electric vehicles or other battery power uses.

Electric vehicles are gaining in popularity, and many owners install a charger at their homes, such as inside garages. Those renting or otherwise not able to install a charger (e.g., in apartments or condominiums) can be at a disadvantage for electric vehicle ownership. There is a need for alternative charging options to expand to marketplace for electric vehicles.

### SUMMARY OF THE INVENTION

A general object of the invention is to provide a portable charging device for electric vehicles (EV). The apparatus, system, and method of this invention allows an EV owner who cannot charge at home or work, due to lack of charging stations/connections, to provide at least a daily range replenishment (DRR) without going to a third-party charging station. In embodiments, the apparatus includes a battery array that is designed to recharge using any available standard (relative to the area) outlet and then deliver that charge to any EV through the vehicle-supplied charger. The apparatus can be transported, preferably wheeled like a carry-on luggage bag, to any parking space from any location where there is available power, such as an apartment or office.

In embodiments, the charging apparatus includes antitheft features, so that the apparatus can be left adjacent the EV for charging without concern. Preferably a physical connection is made between the apparatus and the EV. In embodiments, the physical connection is made with the EV wheel/tire, such as an anchoring device that the car tire is driven onto or is wrapped around the wheel/tire.

Embodiments of the invention include an electric vehicle charging apparatus with a portable housing, a battery array within the portable housing, and an antitheft component connected to the portable housing and configured to connect to or around a wheel of an electric vehicle. In embodiments, the antitheft component is or includes a security loop foldable from an upright position for transport or storage to a horizontal position for receiving the wheel of the electric vehicle. The antitheft component is desirably a security tether, such as attached at opposing ends to the portable housing.

The invention further includes an electric vehicle charging apparatus including a portable housing, a battery array within the portable housing, and a security tether attached to the portable housing. The security tether desirably forms a security loop extending from the portable housing and foldable from an upright position, for transport, storage, or battery array charging, to a horizontal position for receiving a wheel of an electric vehicle. In the horizontal position, the security tether is desirably on a ground surface and adapted to receive the wheel by driving the electric vehicle until the wheel is within the security loop.

The security tether is desirably formed of metal, such as a steel cable. The steel cable is desirably attached at opposing ends to a base or base legs of the portable housing. In embodiments, a second security tether, such as made from a retractable and/or reinforced webbing, is also included, and attachable to a different part of the vehicle.

In embodiments, the portable housing has wheels and a transport handle, desirably a telescoping handle, for moving the apparatus between an electrical outlet for recharging the battery array and an electric vehicle. The security tether can be secured in an upright position for transport by the telescoping handle. For example, the steel cable can be foldable over a top of the portable housing and around or under the handle of the apparatus.

Embodiments of the invention include a tether and/or charging cable holder between the telescoping handle and the portable housing. The tether and/or charging cable holder receives and secures the security tether and/or an EV charging cable between the portable housing and the telescoping handle in a lowered handle position. A handle lock is desirably configured to lock the telescoping handle in a lowered position against the portable housing, such as to secure the user-provided EV charging cable against theft.

In embodiments, the apparatus further includes an alarm system configured to detect and alert an unauthorized tampering. The alarm can include an audio and/or visual alert. Wireless technology can be included to send an alert to a user's electronic device (e.g., phone). The apparatus generally includes an electric cord having a plug adapted to fit into a standard electrical socket, and a charging socket adapted to receive a user's EV charging cable. At least one converter converts alternating current from the cord to direct current for charging the battery array, and/or converts direct current from the battery array to current for charging the electric vehicle.

The invention further includes a method of charging an electric vehicle, including steps of: charging a portable battery array with a standard outlet; transporting the portable battery array to the electric vehicle; lowering a security loop that is connected to the portable battery array to a horizonal position; moving/driving a tire of the electric vehicle within the security loop; connecting the portable battery array to the electric vehicle to charge the electric vehicle; and returning the portable battery pack to the standard outlet for charging while the electric vehicle is driven. The portable battery array desirably includes wheels and a telescoping handle, and the security loop and/or charging cable(s) can be secured with the telescoping handle during the charging and the transporting. Other objects and advantages will be apparent to those skilled in the art from the following detailed description taken in conjunction with the appended claims and drawings.

### BRIEF DESCRIPTION OF THE DRAWINGS

Figs. 1-7 illustrate a portable vehicle charger according to embodiments of this invention.
Figs. 8A-8C illustrate a portable vehicle charger according to embodiments of this invention.
Fig. 9 illustrates a security tether according to an embodiment of this invention.
Fig. 10 illustrates a security tether according to an embodiment of this invention.
Figs. 11-15 illustrate a portable vehicle charger according to embodiments of this invention.
Figs. 16-18 illustrate battery arrays according to embodiments of this invention.
Fig. 19A and 19B illustrate battery arrays according to embodiments of this invention.
Fig. 20A and 20B illustrate battery arrays according to embodiments of this invention.
Figs. 21-23 illustrate battery arrays within a portable vehicle charger according to embodiments of this invention.

### DESCRIPTION OF THE INVENTION

The invention includes a portable (e.g., wheeled) battery-based charging device for electric vehicles (EV). The apparatus, system, and method of this invention allow an EV owner who cannot charge at home or work, due to lack of charging stations/connections, to provide at least a daily range replenishment (DRR) without going to a third-party charging station.

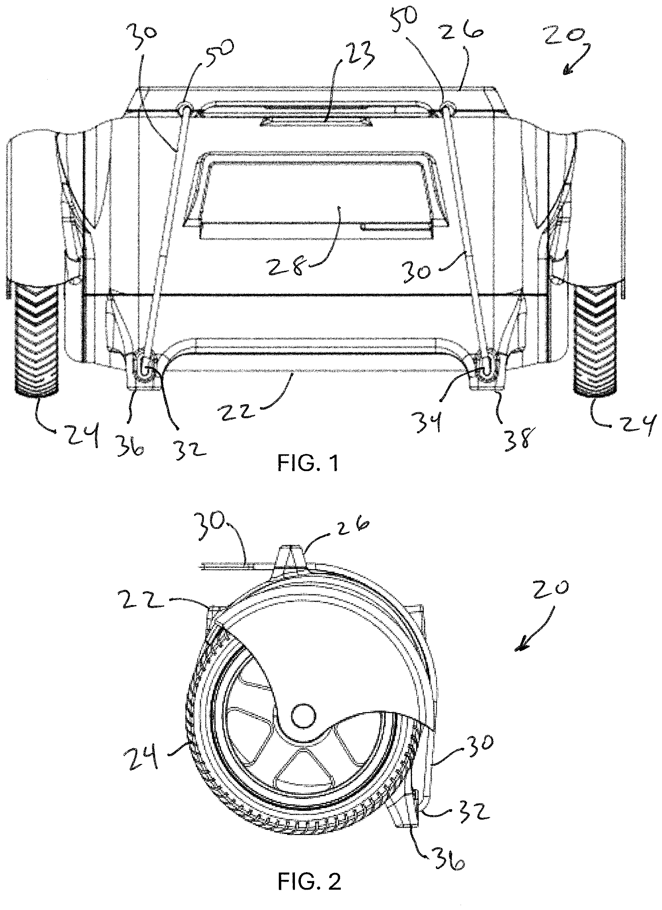

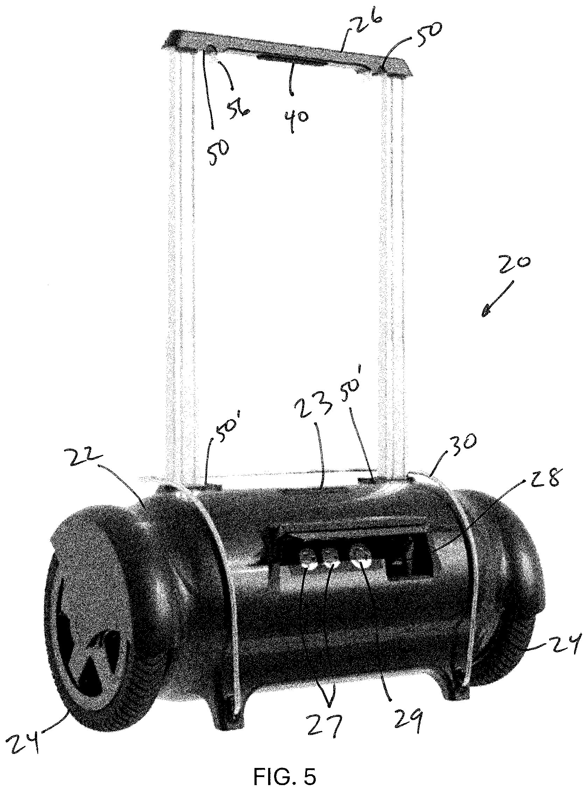

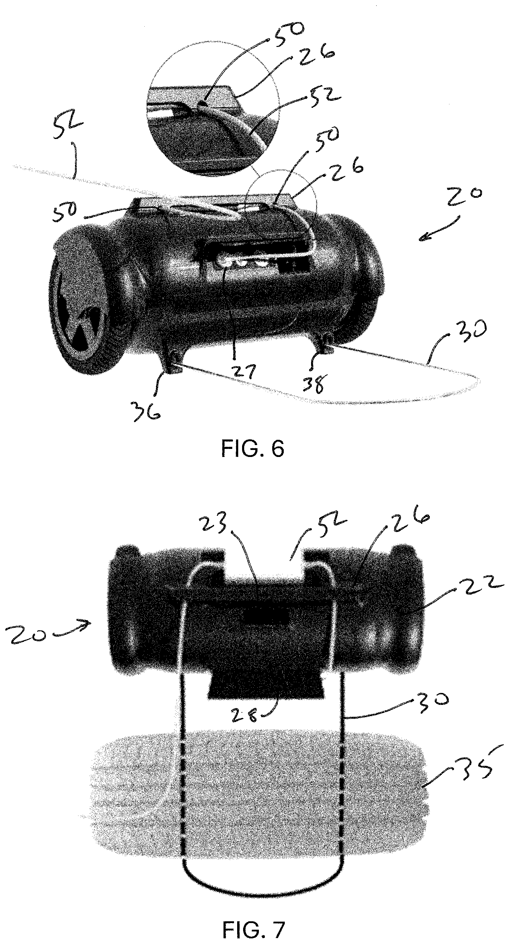

Figs. 1-7 illustrates a charging apparatus 20 and features according to embodiments of this invention. A housing 22 includes wheels 24 and a telescoping handle 26 for ease of transport between an electric outlet and a vehicle. The housing 22 includes a lid 28 that allows access to power supply connections. As shown in Figs. 5 and 6, the charging apparatus 20 includes a power cord 28, preferably retractable by push button 29, that allows for charging the batteries within the apparatus 20, such as using a standard (residential) 3-prong socket. The apparatus 20 also includes one or more standard sockets 27 for an EV charger (e.g., an EV charging cable and any adapter thereof). Two 3-prong sockets 27 are illustrated, such as for dual EV charging. A status panel 23 shows, for example, the state of charge for the device 20, and any other required messages or alerts. Suitable controllers and circuity are included internally to control the EV charging and apparatus recharging.

In the illustrated embodiment, the apparatus 20 includes a U-shaped security tether 30 that can be folded downward onto the parking surface. A vehicle tire can be placed on or within the extended tether to dissuade theft. Fig. 6 shows the security tether 30 in a downward or horizontal position, whereby a vehicle tire 35 can be driven within the loop of the security tether 30, as shown in Fig. 7. The security tether 30 is connected at opposing ends 32, 34 to the housing 30, preferably at a lower end or base of the housing 30 to facilitate folding flat against the ground surface. The ends can be connected to the housing 22 by any suitable means. As illustrated, the ends 32, 34 are connected to legs 36, 38 which extend from the housing 22 to support the apparatus 20. The tether 30 can be any suitable material, but is desirably a steel cable for flexibility and toughness against road surfaces.

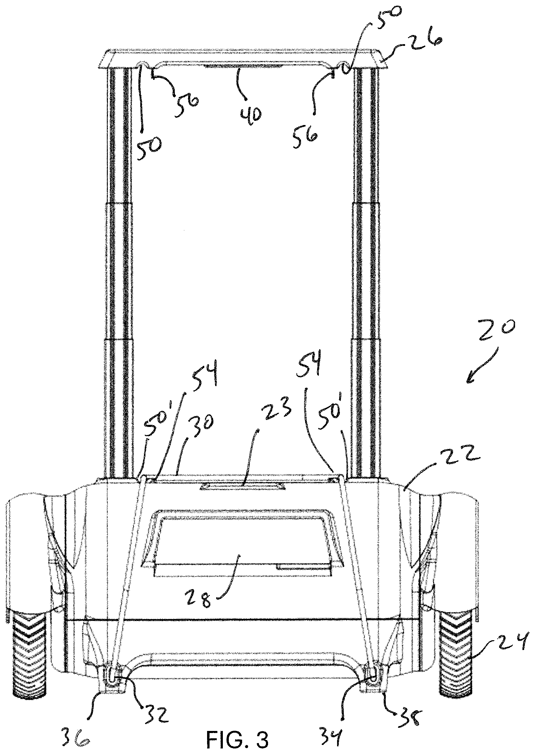

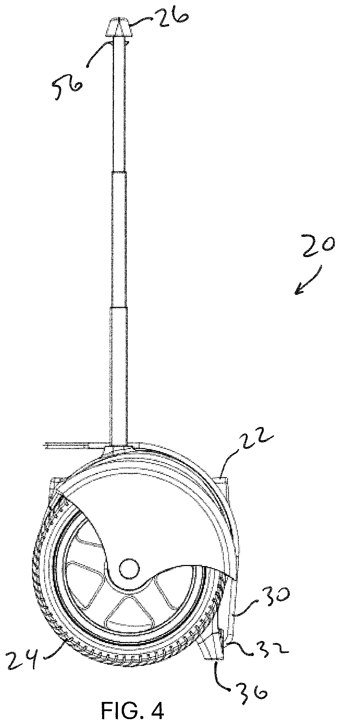

The telescoping handle 26 optionally includes an actuation button 40 to release the handle 26 for extension from the configuration shown in Figs. 1 and 2 to the extended position of Figs. 3 and 4. The handle 26 also desirably is or includes a structure for holding and/or securing the tether 30 and/or an EV charging cable. As illustrated, the underside of the handle 26 and the top of the housing 22 includes grooves 50 and 50' between the telescoping legs that together form a passageway into which the tether 30, as shown in Figs. 1 and 2, and an EV charging cable 52, as shown in Fig. 6, can be secured. Referring to Fig. 6, the cable 52 is wound through the grooves 50/50' to keep the cable 52 from being removed and stolen. A handle lock 54 is configured to lock the handle 26 in the lowered position as shown in Fig. 6. The handle lock 54 includes lock tabs 56 that fit into locking slots in the housing 22. The lock 54 can be operated by any suitable locking mechanism, and actuated by key, readable card, or phone app.

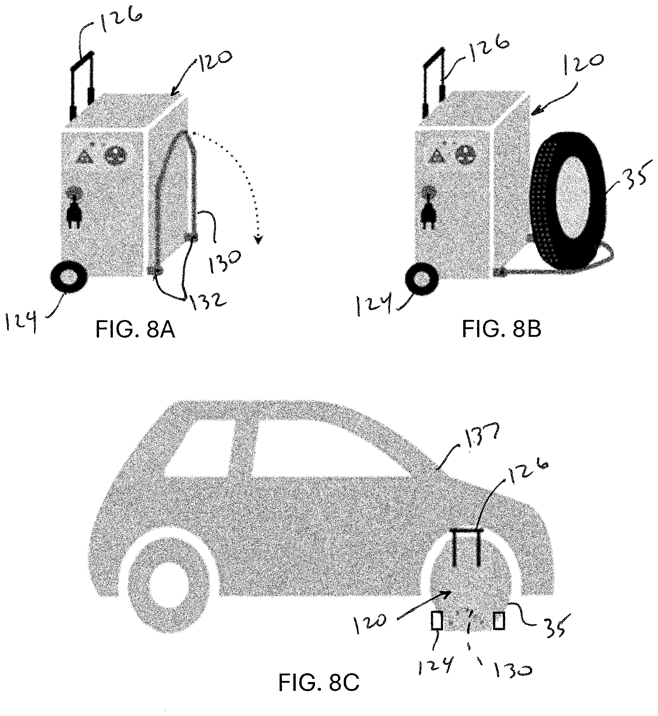

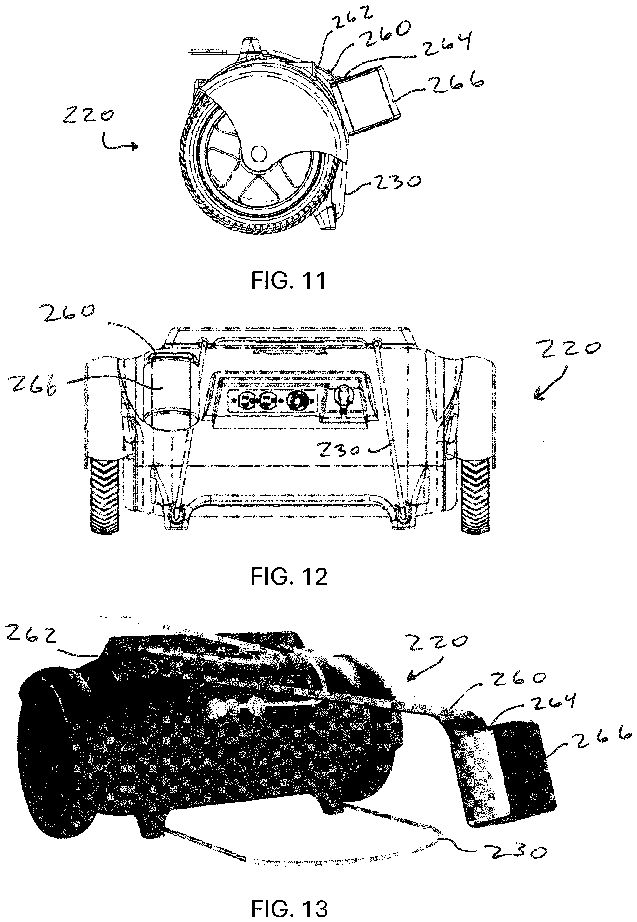

As will be appreciated, alternative sizes, shapes and configurations are available for the apparatus of this invention, and the components thereof. As an example, the housing can be formed more as a box as shown in FIG. 8A-C. The handle grooves can likewise be formed fully in the handle or housing and/or on the outsides of the telescoping handle legs. The security tether can alternatively as described below for Figs. 11-15. Additional security tethers or other connectors can be included to secure the EV charger to the apparatus. Alternatively, the EV charger can be fully integrated with the apparatus. The apparatus can also include an audio and/or visual (e.g., flashing light) alarm if someone tampers with the device. Mobile device alerts (e.g., SMS text messages, push notifications, etc.) are also beneficial.

As an example of use, an apartment dweller leaves the apparatus 20 plugged in at home all day, such as with the security teacher 30 secured in the grooves 50/50' as shown in Figs. 1 and 2. When the person returns home from work the person parks in any parking space available. The person walks to the apartment, unplugs the apparatus 20, and wheels the apparatus 20 to the vehicle. The security tether 30 can be wrapped around the telescoping handle for transport, as shown in Fig. 5. Alternatively, the housing 22 can include alternative means to keep the tether 30 in place during transport, such as magnets or straps. As shown in Figs. 6 and 7, and also Figs. 8A-C, the person places the apparatus 20 in front of or behind a vehicle tire 35 and folds down the U-shaped security tether 30. The car is then driven forward or backwards until the tire 35 is within and/or covers the security tether 30. The person plugs the EV's charger 52 into the apparatus 20, lowers the handle 26 to lock the cable 52 to the housing 22 (Figs. 6-7) and leaves the apparatus 20 to charge the vehicle, such as overnight. In the morning, the person drives off the security tether 30 and returns the apparatus 20 to the apartment, where the apparatus 30 is plugged into an outlet and left to charge while the person is at work. Doing this every day provides the person with the DRR they need to commute. Alternately or additionally, the person might charge the apparatus (or a second apparatus) at the office during the night and plug in the EV all day while at the office. The apparatus can also be transported with the vehicle, such as for additional charging on extended or remote trips.

The housing 22 includes any suitable battery array and electrical circuitry to operate the apparatus 20 and charge the intended vehicle. In embodiments, the battery array has a capacity of about 5kWh to 10Kwh, and preferably 5-7 kWh, thus balancing overall mass/weight with a useable charge. As an example, a 5kWh battery pack should provide between 15 to 20 miles of DRR. A10kWh pack should do about twice that DRR. It is estimated that 80% of commuters require less than 24 miles for their return trip commute. The apparatus housing 22 can include additional or internal sub-housings for power electronics, a battery management system, charging telematics, and/or any other desired or optional systems.

The apparatus preferably includes a DC/AC inverter. In embodiments, a microconverter is included to convert the 110/220 grid voltage to at least 60 V DC, and back to 110/220 V AC for EV charging. Exemplary battery management systems include Beam Global's Intelligent Battery Thermal Management system (iBTM), such as disclosed in U.S. Patent 11,050,101, and its smart battery management system (BMS), such as disclosed in U.S. Patent 11,749,847, each Patent herein incorporated by reference. The iBTM can monitor a thermal storge capacity of the PCM matrix and control a power of the electrochemical cells as a function of the thermal energy capacity, thereby reducing a likelihood of the battery overheating. The BMS can monitor a temperature and/or voltage of the battery pack and modulate the charging to heat the battery to a minimum temperature, and/ or reach a minimum voltage, to support full or fast charging.

Telematics with a WiFi or Bluetooth capability can be included to communicate with the user and/or a utility operator for peak efficiency or information and alerts. In embodiments, the apparatus preferably has components for participating in behind-the-meter utility programs for energy storage and use for demand shifting or peak shaving.

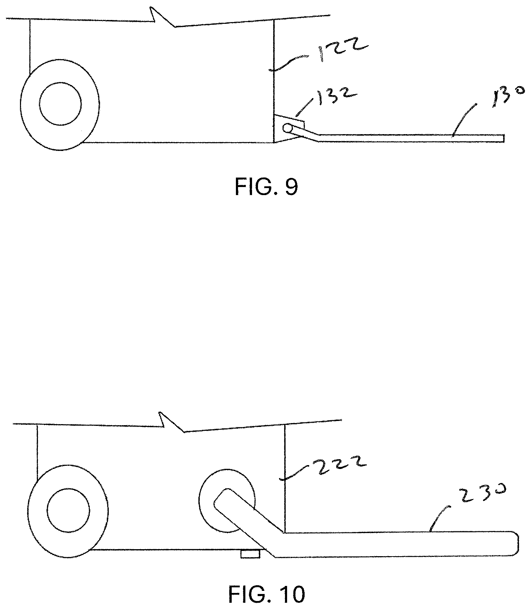

Figs. 8A-C illustrate an alternative embodiment of a charging apparatus 120, with handle 126 and wheels 124 according to this invention. Fig. 8A illustrates the lowering of a security tether 130. The tether is connected at opposing ends by hinges 132. The tether loop 130 and hinges 132 are desirably formed of strong, anti-theft materials, and connected to an internal frame of the device. Fig. 8B shows a tire 135 within the security tether 130, and FIG. 8C shows the apparatus 120 adjacent to a vehicle 137 for charging. Fig. 9 shows an example of an external hinge 132.

Keeping fasteners inside the device can improve the security of the security loop. The housing can additionally include slot openings in the tire-facing side so that the hinge can be internally mounted. The security loop 130 can be formed of a metal tubing, and can be connected to the device in various ways. Fig. 10 shows an alternative embodiment where the security tether loop 230 is connected through opposing side walls of the housing 222. Fig. 10 shows an example of an internal hinge 232, with a thicker bar-like tether 230. The tether can also be a flattened tube or flat metal paddle for easier tire placement.

In embodiments of this invention, the apparatus includes one or more additional security measures, such as an additional or secondary security tether. Preferably the additional security tether makes theft more difficult, such as removing the ability to jack up the car to remove the apparatus. Figs. 11-15 illustrate a charging apparatus 220, similar to that illustrated in Figs. 1-7 (like components not described for sake of brevity), but with both a security tether 230 and an additional or secondary security tether 260. Secondary security tether 260 is illustrated as a retractable webbing strap, such as made of reinforced seat belt material with steel wires woven into the webbing so that it is difficult to cut. The secondary security tether 260 can be about 10cm across and thin like a seatbelt, and desirably retracts into an opening 262, similar to a seatbelt retraction.

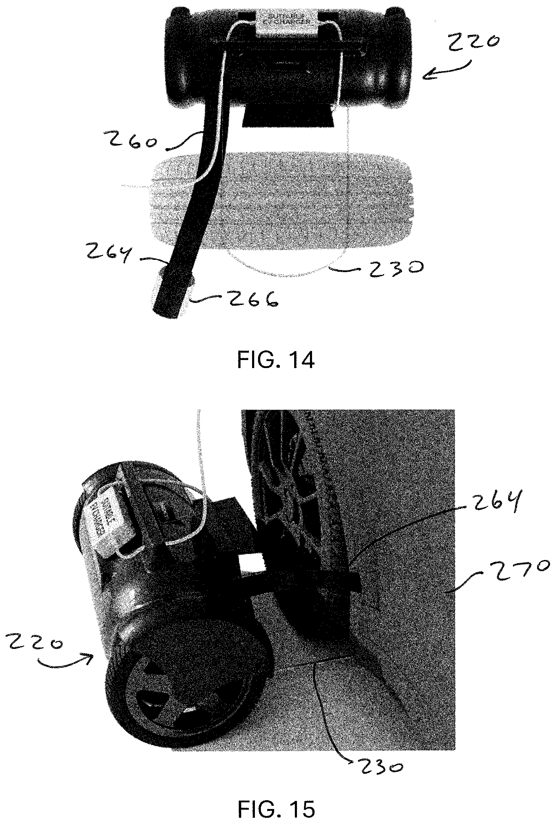

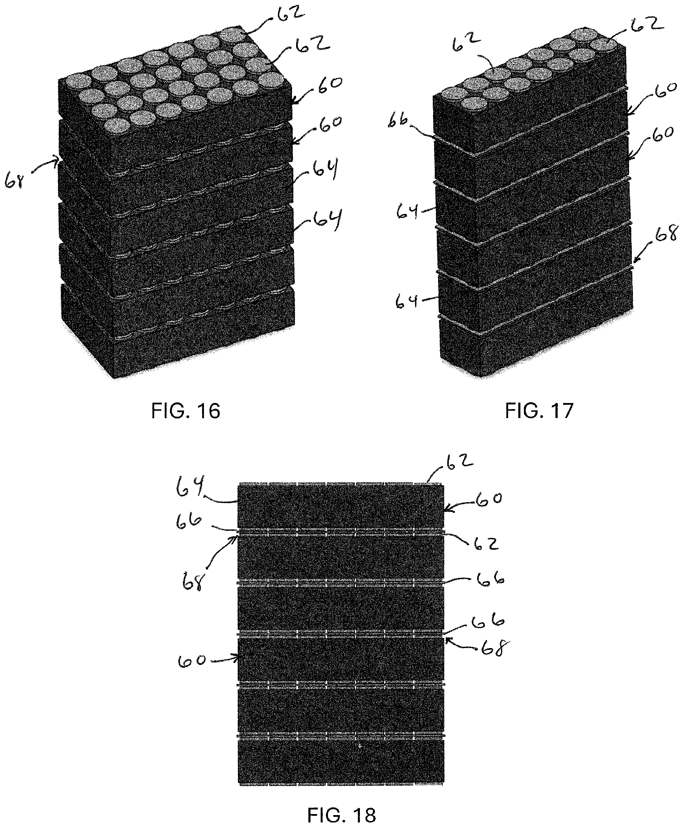

At the distal end 264, the secondary security tether 260 includes a bulbous anchor 266 or other suitable securing lump-like mechanism. As illustrated, the bulbous anchor 266 is a cylindrical lump (approximately 10 cm long and 10 cm in diameter) around which the webbing strap is stitched. A user will pull the bulbous anchor 266 (and strap) from its retractable housing (Figs. 13-14) and close it under the car door 270 nearest to the apparatus 220 (Fig. 15). The only way to get the bulbous anchor 266 out is to open the car door 270. In this way, even if someone lifts the car, the reinforced secondary security tether 260 also needs to be cut. The secondary security tether 260 can also include an alarm mechanism, such as an embedded circuit, to issue an alarm if cut. As will be appreciated various and alternative materials and configurations can be used for the secondary security tether, such as steel ribbon or a locking cable for wrapping through one or more spokes of a car wheel. Figs. 16-18 illustrate battery arrays according to presently preferred embodiments. Each battery array is formed of a plurality of battery modules 60. Each battery module 60 includes a plurality of electrochemical battery cells 62 each contained in a corresponding void of a matrix material 64. The matrix material 64 is preferably a thermal management matrix, such as a porous graphite material impregnated with a phase change material (PCM). The PCM material of this invention can include any suitable material, such as a wax (e.g., paraffin wax, vegetable based wax, etc.) a hydrated salt, or combinations thereof. The PCM material can also be polymer encapsulated according to known methods. Suitable PCM composite materials are disclosed in U.S. Patents 6,468,689, 6,942,944, 8,273,474, 8,105,716, 10,005,941, and 10,164,301, each herein incorporated by reference.

Connected to each module, and to the individual cells 62, is a current collector 66. A spacing 68 between adjacent modules allows for the placement of the current collector. The spacing 68 can also incorporate a flame and/or electrolyte retardant material or arrestor mechanism, such as disclosed in U.S. Patent Publication 2020/0403201, herein incorporated by reference. In embodiments, the spacing includes a hydrogel retardant, such as enclosed in a rupturable polymer container. Suitable release valves can be incorporated in the arrestor and/or housings to release cell failure pressure.

As will be appreciated, various and alternative sizes, shapes, configurations, and capacities are available for the battery arrays according to this invention. As a first example, without limitation, Fig. 16 shows a battery array of 168 cells 62 designed for a housing space of 20x14x9 inches. Each module 60 height is 80 mm, with a cell-to-cell spacing of 3 mm. A 5 mm space is provided between modules 60, with 2 mm needed for the current collector and 3 mm of empty space available for additional heat dissipation and/or retardant materials. In embodiments, each cell 62 has an approximate capacity of 26 Ah, and an energy of 95 Wh. The full battery array has an approximate capacity of 312 Ah, an energy of 16 kWh, a voltage range of 35V-58.8V, and a 1C charge/discharge rate.

Figs. 17 and 18 show, without limitation, a second exemplary battery array 60. Figs. 17 and 18 show a battery array of 84 cells 62 also designed for a housing space of 20x14x9 inches. Each module 60 height is again 80 mm, with a cell-to-cell spacing of 3 mm. A 5 mm space is provided between modules 5, with 2 mm needed for the current collector 66 and 3 mm of empty space for additional heat dissipation and/or retardant materials, such as a protective sheet/screen 60 made of metal, ceramic, graphite, etc. In embodiments, each cell 62 has an approximate capacity of 26 Ah, and an energy of 95 Wh. The full battery array has an approximate capacity of 156 Ah, an energy of 8 kWh, with a voltage range of 35V-58.8V, and a 1C charge/discharge rate. The embodiment of Figs. 17 and 18 provides a reasonable weight and enough useful energy to provide approximately 25-30 miles of drive range (i.e., around 4 miles per kWh).

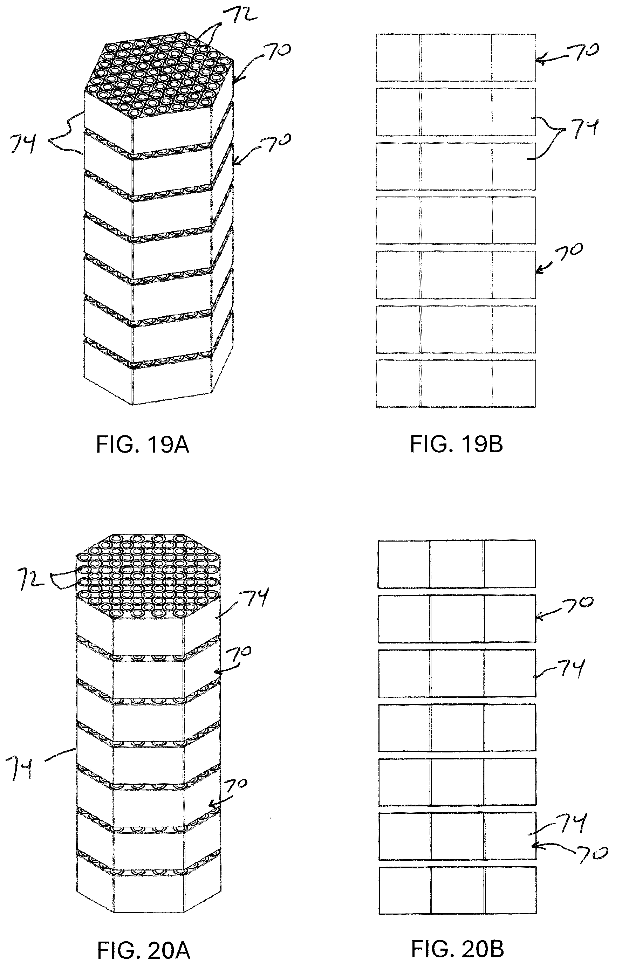

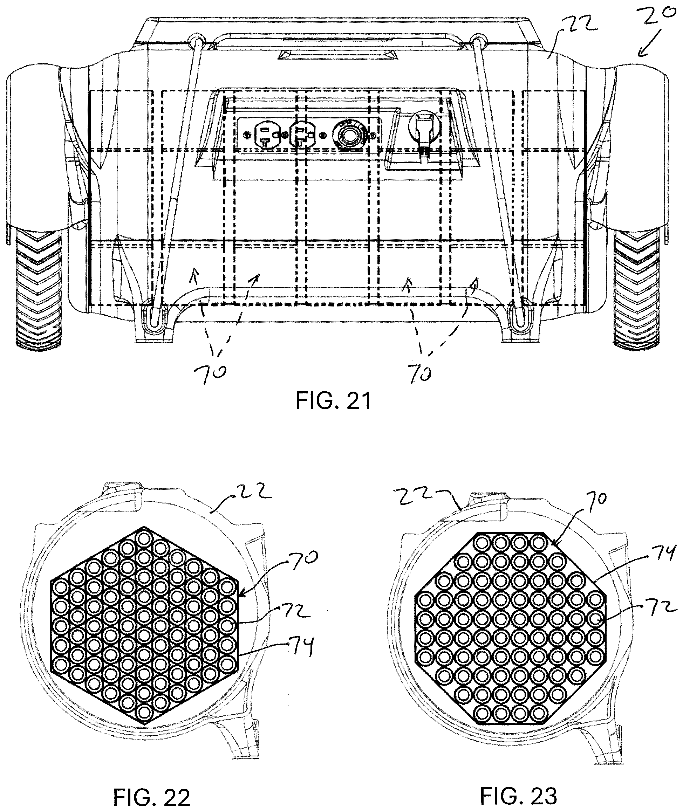

Fig. 19A-B and 20A-B illustrate additional battery array configurations according to embodiments of this invention. Each battery array is formed of a plurality of battery modules 70. Each battery module 70 includes a plurality of electrochemical battery cells 72 each contained in a corresponding void of a matrix 74. The matrix material 74 has an overall shape configured to work within the tubular body of apparatus 20, shown in Fig. 1. As illustrated in Figs. 19A-B, the matrix 74 has a hexagonal shape. Figs. 20A-B show a matrix 74 having an octagonal shape. As shown in Figs. 21-23, these battery module shapes, compared to rectangular, allow for an increased number of battery cells 72 within the tubular housing 22 of Fig. 1. While the matrix 74 can alternatively be round, the polygonal shapes shown in Figs. 19A-B and 20A-B allow for spacings 75 (See Figs. 22-23) for electronics, such as wiring and circuit modules. As will be appreciated, various and alternative sizes, shapes, and configurations are available for the battery arrays/modules of this invention, such as modules that are round, square, decagonal, asymmetrical, etc.. In addition, the number and thickness of the modules can vary depending on the number and size of the battery cells used.

Thus, the invention provides a solution for charging electric vehicles where no charging station is within reach. The apparatus of this invention can be charged and stored within a residence or office, and can even be transported in the vehicle as a backup battery.

The invention illustratively disclosed herein suitably may be practiced in the absence of any element, part, step, component, or ingredient which is not specifically disclosed herein.

While in the foregoing detailed description this invention has been described in relation to certain preferred embodiments thereof, and many details have been set forth for purposes of illustration, it will be apparent to those skilled in the art that the invention is susceptible to additional embodiments and that certain of the details described herein can be varied considerably without departing from the basic principles of the invention.

## Claims

1. An electric vehicle charging apparatus, comprising:
a portable housing;
a battery array within the portable housing; and
an antitheft component connected to the portable housing and configured to connect to or around a wheel of an electric vehicle.

2. The apparatus of Claim 1, wherein the antitheft component comprises a security tether, preferably a steel cable and/or a reinforced webbing.

3. The apparatus of Claim 2, wherein the security tether is attached at opposing ends to the portable housing.

4. The apparatus of one of the preceding claims, wherein the antitheft component comprises a security loop foldable from an upright position for transport or storage to a horizontal position for receiving the wheel of the electric vehicle, wherein the security loop comprises a tether cable attached at opposing ends to a base of the portable housing.

5. The apparatus of one of the preceding claims, further comprising a telescoping handle connected to the portable housing, wherein the security tether or security loop is secured in the upright position by the telescoping handle.

6. The apparatus of one of the preceding claims, further comprising an alarm system configured to detect and alert an unauthorized tampering.

7. The apparatus of one of the preceding claims, further comprising wheels connected to opposing sides of the portable housing.

8. The apparatus of one of the preceding claims, further comprising:
an electric cord having a plug adapted to fit into a standard electrical socket;
a charging socket adapted to receive an EV charging cable; and
a converter for converting alternating current from the cord to direct current for charging the battery array, and converting direct current from the battery array to current for charging the electric vehicle.

9. The apparatus of Claim 1, further comprising:
a security tether attached to the portable housing, the security tether forming a security loop extending from the portable housing and foldable from an upright position, for transport, storage, or battery array charging,
to a horizontal position for receiving a wheel of an electric vehicle.

10. The apparatus of Claim 9, wherein in the horizontal position, the security tether is on a ground surface and adapted to receive the wheel by driving the electric vehicle until the wheel is within the security loop.

11. The apparatus of Claim 9 or 10, further comprising:
wheels connected to opposing sides of the portable housing; and
a telescoping handle connected to and extendable from the portable housing, wherein the telescoping handle is adapted to secure the security tether in the upright position.

12. The apparatus of one of Claims 9-12, wherein the security tether comprises a steel cable attached at opposing ends to base legs of the portable housing and the steel cable is foldable over a top of the portable and around or under the telescoping handle.

13. The apparatus of Claim 12, further comprising a tether and/or charging cable holder between the telescoping handle and the portable housing, wherein the tether and/or charging cable holder receives and secures the security tether and/or charging cable between the portable housing and the telescoping handle in a lowered handle position.

14. The apparatus of Claim 13, further comprising a handle lock configured to lock the telescoping handle in a lowered position against the portable housing.

15. A method of charging an electric vehicle, comprising:
charging a portable battery array with a standard outlet;
transporting the portable battery array to the electric vehicle;
lowering a security loop that is connected to the portable battery array to a horizonal position;
moving a tire of the electric vehicle within the security loop;
connecting the portable battery array to the electric vehicle with a charging cable to charge the electric vehicle; and
returning the portable battery pack to the standard outlet for charging while the electric vehicle is driven.
